# EUROPÄISCHE PATENTSCHRIFT

(11) **EP 0 720 689 B1**
(45) Veröffentlichungstag und Bekanntmachung des Hinweises auf die Patenterteilung: **22.04.1998**
(21) Anmeldenummer: 94926795.9
(22) Anmeldetag: 19.09.1994
(51) Int. Cl.: F02C 7/18, F01K 23/06

(54) **VORRICHTUNG ZUR KÜHLUNG DES KÜHLMITTELS DER GASTURBINE EINER GAS- UND DAMPFTURBINENANLAGE**
DEVICE FOR COOLING THE GAS-TURBINE COOLANT IN A COMBINED GAS AND STEAM TURBINE INSTALLATION
SYSTEME PERMETTANT DE REFROIDIR L'AGENT REFRIGERANT DE LA TURBINE A GAZ D'UNE INSTALLATION A TURBINE A GAZ ET A TURBINE A VAPEUR COMBINEES

(30) Priorität: 30.09.1993 DE 4333439
(43) Veröffentlichungstag der Anmeldung: 10.07.1996
(73) Patentinhaber: SIEMENS AKTIENGESELLSCHAFT, 80333 München (DE)
(72) Erfinder: GABRIEL, Christian, D-91096 Möhrendorf (DE)
(86) Internationale Anmeldenummer: DE9401085
(87) Internationale Veröffentlichungsnummer: WO9509300

(56) Entgegenhaltungen:
- EP-A- 0 106 313
- EP-A- 0 379 880
- EP-A- 0 519 304
- EP-A- 0 566 868
- GB-A- 2 034 822
- GB-A- 2 264 539

## Beschreibung

Die Erfindung bezieht sich auf eine Vorrichtung zur Kühlmittelkühlung einer gekühlten Gasturbine einer Gas- und Dampfturbinenanlage, die einen der Gasturbine nachgeschalteten Abhitzedampferzeuger umfaßt, dessen Heizflächen in einen Wasser-Dampf-Kreislauf der Dampfturbine geschaltet sind, wobei in einem Zwischenkreis ein zur Kühlung des Kühlmittels vorgesehener erster Wärmetauscher verknüpft ist mit der Sekundärseite eines zweiten Wärmetauschers.

Eine derartige Gas- und Dampfturbinenanlage wird üblicherweise zur Erzeugung elektrischer Energie eingesetzt. Zur Steigerung der Leistungsfähigkeit der Gasturbine und damit zur Erzielung eines möglichst hohen Wirkungsgrades wird eine besonders hohe Temperatur des Arbeitsmittels am Eintritt der Turbine von z.B. 1200 bis 1500° C angestrebt. Eine derartig hohe Turbineneintrittstemperatur bringt allerdings Werkstoffprobleme mit sich, insbesondere in bezug auf die Hitzebeständigkeit der Turbinenschaufeln.

Eine Steigerung der Turbineneintrittstemperatur kann dann zugelassen werden, wenn die Turbinenschaufeln so weit gekühlt werden, daß sie stets eine unterhalb der zulässigen Werkstofftemperatur liegende Temperatur aufweisen. Dazu ist es aus der EP-PS 0 379 880 bekannt, in einem der Gasturbine zugeordneten Kompressor verdichtete Luft abzuzweigen und diese als Kühlmittel dienende Luft vor Eintritt in die Gasturbine zu kühlen. Aus der EP 0 519 304 A1 ist es weiter bekannt, hierfür einen Luft-Wasser-Kühler einzusetzen, mit dem die bei der Kühlmittelkühlung gewonnene Wärme über dazu verwendetes Speisewasser dem Wasser-Dampf-Kreislauf zugeführt wird. Nachteilig dabei ist allerdings ein hoher meß- und regelungstechnischer Aufwand, insbesondere zur Druckhaltung und Mengeneinstellung des zur Kühlmittelkühlung aus dem Wasser-Dampf-Kreislauf entnommenen Speisewassers. Ferner ist es aus der GB 2 264 539 A bekannt, die bei der Kühlmittelkühlung gewonnene Wärme über einen Zwischenkreis an das Speisewasser des Wasser-Dampf-Kreislaufs zu übertragen.

Der Erfindung liegt daher die Aufgabe zugrunde, eine Vorrichtung zur Kühlmittelkühlung derart auszugestalten, daß unter Vermeidung der vorgenannten Nachteile eine gute Gasturbinenkühlung gewährleistet ist, und daß durch eine besonders effektive Nutzung der dabei gewonnenen Wärme ein hoher Gesamtwirkungsgrad der Gas- und Dampfturbinenanlage erreicht wird. Dies soll mit möglichst geringem technischen Aufwand erreicht werden.

Diese Aufgabe wird erfindungsgemäß dadurch gelöst, daß der zweite Wärmetauscher primärseitig an einen mit einer Verdampfer-Heizfläche verbundenen Wasser-Dampf-Trennbehälter angeschlossen ist, wobei dieser wasserseitig mit dem primärseitigen Eingang und dampfseitig mit dem primärseitigen Ausgang des zweiten Wärmetauschers verbunden ist.

Die bei der Kühlmittelkühlung gewonnene und über den Zwischenkreis, d.h. über einen geschlossenen, separaten Kühlkreislauf, an den Gas- und Dampfturbinenprozeß übertragene Wärme wird somit zur Erzeugung von Dampf genutzt. Dabei ist aufgrund der Konstanz der Menge des in dem Zwischenkreis vorhandenen Sekundärmediums keine Mengenregelung erforderlich. Da der Wasser-Dampf-Kreislauf vom Zwischenkreis strömungstechnisch entkoppelt ist, ist die Pumpleistung zum Fördern des Sekundärmediums im Zwischenkreis besonders gering.

Das Kühlmittel zum Kühlen der Gasturbine kann flüssig oder gasförmig sein. Vorzugsweise wird als Kühlmittel komprimierte Luft aus einem der Gasturbine zugeordneten Luftverdichter verwendet.

Der zweite Wärmetauscher kann - je nach erforderlichem Temperaturniveau - an unterschiedliche Verdampferheizflächen des Abhitzedampferzeugers angeschlossen sein. Zweckmäßigerweise ist der zweite, sekundärseitig in den Zwischenkreis geschaltete Wärmetauscher primärseitig an einen mit einer Niederdruck-Verdampferheizfläche verbundenen Wasser-Dampf-Trennbehälter angeschlossen.

Zum Fördern des in dem Zwischenkreis strömenden und das Kühlmittel kühlenden Sekundärmediums ist zweckmäßigerweise dem ersten, primärseitig in den Zwischenkreis geschalteten Wärmetauscher eine Pumpe vorgeschaltet. Des weiteren ist zweckmäßigerweise dem zweiten Wärmetauscher primärseitig eine Pumpe vorgeschaltet, die zum Fördern des ihn durchströmenden Wassers oder Wasser-Dampf-Gemisches (Tertiärmedium) aus dem Wasser-Dampf-Kreislauf dient.

Um zusätzlich Wasser, insbesondere Deionat, in den geschlossenen Kühlkreislauf einbringen zu können, mündet in den Zwischenkreis eine Einspeiseleitung ein.

Um eine ausreichende Kühlwirkung auch bei einer betriebsbedingt verminderten Dampferzeugung, insbesondere bei reinem Gasturbinenbetrieb (single-cycle-Betrieb),zu gewährleisten, ist in den Zwischenkreis ein Hilfskühler einschaltbar, der parallel zum ersten Wärmetauscher liegt.

Die mit der Erfindung erzielten Vorteile bestehen insbesondere darin, daß durch Verwendung von zwei Wärmetauschern in einem geschlossenen Zwischenkreis eine besonders geeignete Wärmerückführung in den Gesamtprozeß bei gleichzeitig einfacher Betriebsweise und geringem meß- und regelungstechnischem Aufwand möglich ist. Außerdem ist ein Kühlmittelaustausch nicht erforderlich, es sei denn, daß - unter Verwendung der gleichen Systemtechnik - das Sekundärmedium des Zwischenkreises gegen ein andersartiges ausgetauscht werden soll.

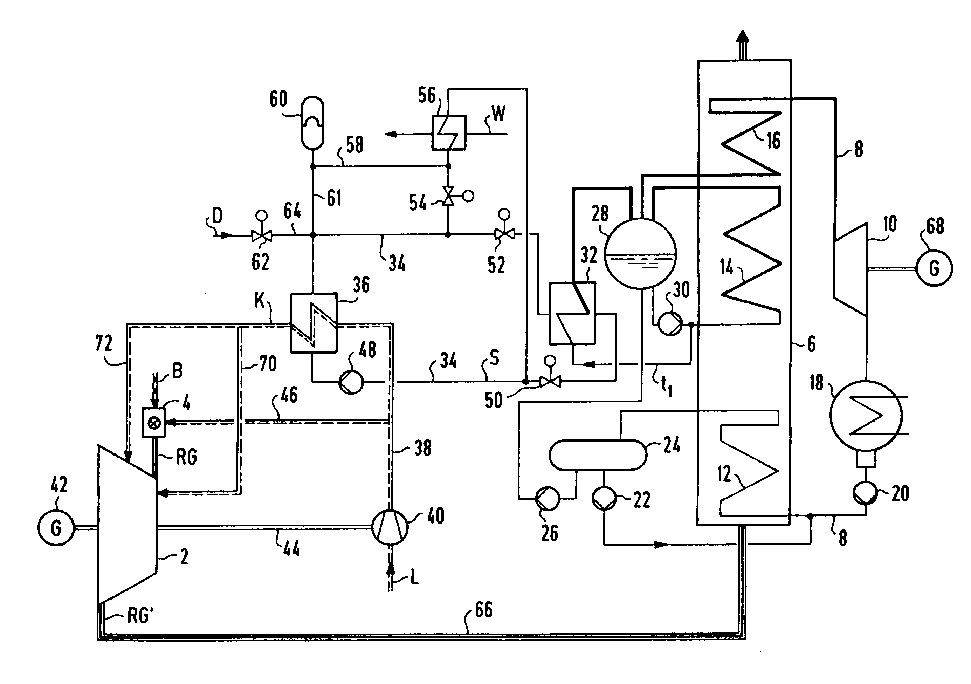

Ein Ausführungsbeispiel der Erfindung wird anhand einer Zeichnung näher erläutert. Darin zeigt die Figur schematisch eine Gas- und Dampfturbinenanlage mit einer Vorrichtung zur Kühlung des Kühlmittels für die Gasturbine.

Die in der Figur schematisch dargestellte Gas- und Dampfturbinenanlage umfaßt eine Gasturbine 2 mit vorgeschalteter Brennkammer 4 und gasseitig nachgeschaltetem Abhitzedampferzeuger 6, dessen Heizflächen in einen Wasser-Dampf-Kreislauf 8 einer Dampfturbine 10 geschaltet sind. Die Heizflächen sind im einzelnen ein Niederdruck-Vorwärmer 12, ein Niederdruck-Verdampfer 14 und ein Niederdruck-Überhitzer 16.

Der Dampfturbine 10 ist ein Kondensator 18 nachgeschaltet, der über eine Kondensatpumpe 20 mit dem Niederdruck-Vorwärmer 12 verbunden ist. Dieser ist ausgangsseitig und über eine Umwälzpumpe 22 eingangsseitig mit einem Speisewasserbehälter 24 verbunden. Der Speisewasserbehälter 24 ist ausgangsseitig über eine Speisewasserpumpe 26 mit einem Wasser-Dampf-Trennbehälter 28 verbunden. An diesen Wasser-Dampf-Trennbehalter 28 sind wasserseitig über eine Pumpe 30 der Niederdruck-Verdampfer 14 sowie der primärseitige Eingang eines (zweiten) Wärmetauschers 32 angeschlossen. Außerdem sind dort dampfseitig der Niederdruck-Überhitzer 16 und der primärseitige Ausgang des Wärmetauschers 32 angeschlossen. Der Wärmetauscher 32 ist somit dem Niederdruck-Verdampfer 14 über den Wasser-Dampf-Trennbehälter 28 parallel geschaltet.

Der (zweite) Wärmetauscher 32 ist sekundärseitig in einen Zwischenkreis 34 geschaltet, in den die Primärseite eines (ersten) Wärmetauschers 36 geschaltet ist. Dieser ist sekundarseitig in eine in die Gasturbine 2 mündende Kühlluftleitung 38 geschaltet.

Die Kühlluftleitung 38 ist mit einem der Gasturbine 2 zugeordneten Luftverdichter 40 verbunden. Dieser Luftverdichter 40 sowie ein von der Gasturbine 2 angetriebener elektrischer Generator 42 sitzen auf einer gemeinsamen Welle 44. Ein Zweig 46 der Kühlluftleitung 38 mündet in die der Gasturbine 2 zugeordnete Brennkammer 4.

In den Zwischenkreis 34 sind eine Pumpe 48 sowie zwei motorisch einstellbare Ventile 50, 52 geschaltet. Über diese Ventile 50, 52 sowie über ein ebenfalls motorisch einstellbares Ventil 54 ist in den Zwischenkreis 34 ein Hilfskühler 56 einschaltbar, der über eine Leitung 58 mit einem Ausgleichsbehälter 60 verbunden ist. Dieser ist über eine Leitung 61 auch direkt an den Zwischenkreis 34 angeschlossen. In den Zwischenkreis 34 mündet außerdem eine mit einem Ventil 62 versehene Einspeiseleitung 64 für Zusatzwasser D, z.B. Deionat.

Beim Betrieb der Gas- und Dampfturbinenanlage wird der Brennkammer 4 Brennstoff B zugeführt. Der Brennstoff B wird zur Erzeugung des Arbeitsmittels für die Gasturbine 2 in der Brennkammer 4 mit über den Zweig 46 geführter verdichteter Luft L aus dem Luftverdichter 40 verbrannt. Das bei der Verbrennung entstehende heiße und unter hohem Druck stehende Arbeitsmittel oder Rauchgas RG wird in der Gasturbine 2 entspannt und treibt dabei diese und damit den Luftverdichter 40 sowie den Generator 42 an. Das aus der Gasturbine 2 austretende entspannte Rauchgas RG' wird über eine Rauchgasleitung 66 in den Abhitzedampferzeuger 6 eingeleitet und dort zur Erzeugung von Dampf für die Gasturbine 10 genutzt. Zu diesem Zweck sind der Rauchgasstrom und der Wasser-Dampf-Kreislauf 8 im Gegenstrom miteinander verknüpft.

Um eine besonders gute Wärmeausnutzung zu erreichen, werden üblicherweise Dämpfe bei unterschiedlichen Druckniveaus erzeugt, deren Enthalpie zur Stromerzeugung in der einen Generator 68 antreibenden Dampfturbine 10 genutzt wird. In dem Ausführungsbeispiel ist lediglich die Niederdruck-Stufe dargestellt und beschrieben.

Der aus der Dampfturbine 10 austretende entspannte Dampf gelangt in den Kondensator 18 und kondensiert dort. Das Kondensat wird über die Kondensatpumpe 20 und den Niederdruck-Vorwärmer 12 in den Speisewasserbehälter 24 gefördert. Ein Teil des Speisewassers wird mittels der Umwälzpumpe 22 zur weiteren Vorwärmung erneut über den Niederdruck-Vorwärmer 12 und von dort zurück in den Speisewasserbehälter 24 gefördert. Das vorgewärmte Speisewasser wird aus dem Speisewasserbehälter 24 mittels der Speisewasserpumpe 26 in den Wasser-Dampf-Trennbehälter 28 gefördert. Von dort wird das vorgewärmte Speisewasser über die Pumpe 30 in den Niederdruck-Verdampfer 14 geführt, wo es verdampft. Der Dampf wird in dem Wasser-Dampf-Trennbehälter 28 vom verbleibenden Wasser getrennt und in den Niederdruck-Überhitzer 16 geführt. Von dort gelangt der überhitzte Dampf in die Dampfturbine 10. Der überhitzte Dampf wird in der Dampfturbine 10 entspannt und treibt dabei diese und damit den Generator 70 an.

Ein Teilstrom t₁ des vorgewärmten Wassers aus dem Wasser-Dampf-Trennbehälter 28 wird über den Wärmetauscher 32 geführt, wobei das Wasser mindestens teilweise verdampft. Die dazu erforderliche Wärme wird einem in dem Zwischenkreis 34 strömenden Sekundärmedium S entnommen. Der in dem Warmetauscher 32 erzeugte Dampf oder das Wasser-Dampf-Gemisch wird ebenfalls in den Wasser-Dampf-Trennbehälter 28 geführt.

Das bei dem Wärmetransfer in dem Wärmetauscher 32 gekühlte Sekundärmedium S des Zwischenkreises 34 dient zum Kühlen von komprimierter Luft L, die der Gasturbine 2 aus dem Luftverdichter 40 zugeführt wird. Der Wärmetransfer von der komprimierten Luft L auf das Sekundarmedium S erfolgt in dem Wärmetauscher 36. Die in dem Wärmetauscher 36 gekühlte Luft L - im folgenden als Kühlluft K bezeichnet - wird sowohl den Laufschaufeln der Gasturbine 2 über eine Leitung 70 als auch den Leitschaufeln der Gasturbine 2 über eine Leitung 72 zugeführt.

Für den Fall, daß eine zusätzliche Kühlung der Kühlluft K für die Gasturbine 2 erforderlich ist, z.B. wenn aufgrund einer Abschaltung der Dampfturbinenanlage eine ausreichende Rückkühlung des Sekundärmediums S allein über den Wärmetauscher 32 nicht gewährleistet ist, wird der Hilfskühler 56 in Betrieb genommen. Dazu werden die Ventile 50 und 52 mindestens teilweise geschlossen und das Ventil 54 geöffnet. Gleichzeitig wird dem Hilfskühler 56 ein Kühlmedium W, z.B. Wasser, zugeführt. Volumenänderungen des Sekundärmediums S innerhalb des Zwischenkreises 34 werden über den Ausgleichsbehälter 60 ausgeglichen. Außerdem kann dem Zwischenkreis 34 über die Einspeiseleitung 64 Deionat D zugeführt werden.

Durch die Verwendung eines Zwischenkreises 34 mit zwei Wärmetauschern 32 und 36 ist einerseits strömungstechnisch eine Entkoppelung und andererseits thermisch ein Kopplung zwischen dem Wasser-Dampf-Kreislauf 8 der Dampfturbinenanlage und dem Kühlsystem - im wesentlichen repräsentiert durch die Kühlluftleitung 38 und den Wärmetauscher 36 - erreicht. Dabei sind der meß- und regelungstechnische Aufwand für das Kühlsystem und für den Zwischenkreis 34 sowie die erforderliche Pumpleistung innerhalb des Zwischenkreises 34 besonders gering.

## Patentansprüche

1. Vorrichtung zur Kühlung des Kühlmittels der Gasturbine (2) einer Gas- und Dampfturbinenanlage, die einen der Gasturbine (2) nachgeschalteten Abhitzedampferzeuger (6) umfaßt, dessen Heizflächen (12, 14, 16) in einen Wasser-Dampf-Kreislauf (8) der Dampfturbine (10) geschaltet sind, wobei in einem Zwischenkreis (34) ein zur Kühlung des Kühlmittels (L) vorgesehener erster Wärmetauscher (36) verknüpft ist mit der Sekundärseite eines zweiten Wärmetauschers (32),
**dadurch gekennzeichnet,** daß der zweite Wärmetauscher (32) primärseitig an einen mit einer Verdampferheizfläche (14) verbundenen Wasser-Dampf-Trennbehälter (28) angeschlossen ist, wobei der Wasser-Dampf-Trennbehälter (28) wasserseitig mit dem primärseitigen Eingang und dampfseitig mit dem primärseitigen Ausgang des zweiten Wärmetauschers (32) verbunden ist.

2. Vorrichtung nach Anspruch 1,
**dadurch gekennzeichnet,** daß dem ersten Wärmetauscher (36) eine Pumpe (48) zum Fördern eines Mediums (S) im Zwischenkreis (34) vorgeschaltet ist.

3. Vorrichtung nach Anspruch 1 oder 2,
**dadurch gekennzeichnet,** daß dem zweiten Wärmetauscher (32) eine Pumpe (30) zum Fördern des als Tertiärmedium dienenden Wassers aus dem Wasser-Dampf-Kreislauf (8) vorgeschaltet ist.

4. Vorrichtung nach einem der Ansprüche 1 bis 3,
**dadurch gekennzeichnet,** daß in den Zwischenkreis (34) eine Einspeiseleitung (64) für Zusatzwasser (D), insbesondere für Deionat, mündet.

5. Vorrichtung nach einem der Ansprüche 1 bis 4,
**dadurch gekennzeichnet,** daß in den Zwischenkreis (34) ein Hilfskühler (56) einschaltbar ist.

6. Vorrichtung nach einem der Ansprüche 1 bis 5,
**dadurch gekennzeichnet,** daß an den Zwischenkreis (34) ein Ausgleichsbehälter (60) angeschlossen ist.

## Claims

1. Apparatus for cooling the coolant of the gas turbine (2) of a gas-turbine and steam-turbine plant which comprises a waste-heat steam generator (6) which is located downstream of the gas turbine (2) and the heating surfaces (12, 14, 16) of which are connected into a water/steam circuit (8) of the steam turbine (10), a first heat exchanger (36), which is provided for cooling the coolant (L), being linked in an intermediate circuit (34) to the secondary side of a second heat exchanger (32), characterized in that the second heat exchanger (32) is connected on the primary side to a water/steam separating tank (28) connected to an evaporator heating surface (14), the water/steam separating tank (28) being connected on the water side to the primary-side inlet and on the steam side to the primary-side outlet of the second heat exchanger (32).

2. Apparatus according to Claim 1, characterized in that the first heat exchanger (36) is preceded by a pump (48) for conveying a medium (S) in the intermediate circuit (34).

3. Apparatus according to Claim 1 or 2 characterized in that the second heat exchanger (32) is preceded by a pump (30) for conveying the water serving as a tertiary medium out of the water/steam circuit (8).

4. Apparatus according to one of Claims 1 to 3, characterized in that a feed conduit (64) for additional water (D), especially for deionized water, opens into the intermediate circuit (34).

5. Apparatus according to one of Claims 1 to 4, characterized in that an auxiliary cooler (56) can be connected into the intermediate circuit (34).

6. Apparatus according to one of Claims 1 to 5, characterized in that a compensating tank (60) is connected to the intermediate circuit (34).

## Revendications

1. Dispositif pour refroidir l'agent réfrigérant de la turbine à gaz (2) d'une installation à turbine à gaz et à turbine à vapeur, qui comporte un générateur de vapeur de récupération (6) monté en aval de la turbine à gaz (2), chaudière de récupération dont les surfaces de chauffe (12, 14, 16) sont montées dans un circuit eau-vapeur (8) de la turbine à vapeur (10), un premier échangeur de chaleur (36), prévu pour refroidir l'agent réfrigérant (L), étant, dans un circuit intermédiaire (34), relié au côté secondaire d'un deuxième échangeur de chaleur (32), caractérisé en ce que le deuxième échangeur de chaleur est. côté primaire, raccordé à un ballon séparateur eau-vapeur (28) relié à une surface de chauffe (14) de l'évaporateur, le ballon séparateur eau-vapeur (28) étant, côté eau, relié à l'entrée côté primaire et, côté vapeur, à la sortie côté primaire du deuxième échangeur de chaleur (32).

2. Dispositif selon la revendication 1, caractérisé en ce qu'une pompe (48), pour refouler un fluide (S), est montée dans le circuit intermédiaire (34) en amont du premier échangeur de chaleur (36).

3. Dispositif selon la revendication 1 ou 2, caractérisé en ce qu'une pompe (30), pour refouler du circuit eau-vapeur (8) l'eau servant de fluide tertiaire, est montée en amont du deuxième échangeur de chaleur (32).

4. Dispositif selon l'une des revendications 1 à 3, caractérisé en ce qu'une conduite d'alimentation (64) pour de l'eau d'appoint (D), en particulier de l'eau désionisée, débouche dans le circuit intermédiaire (34).

5. Dispositif selon l'une des revendications 1 à 4, caractérisé en ce qu'un refroidisseur auxiliaire (56) peut être inséré dans le circuit intermédiaire (34).

6. Dispositif selon l'une des revendications 1 à 5, caractérisé en ce qu'un ballon de compensation (60) est raccordé au circuit intermédiaire (34).
